# EUROPEAN PATENT APPLICATION

(11) **EP 4 498 220 A1**
(43) Date of publication of application: **29.01.2025**
(21) Application number: 24190425.9
(22) Date of filing: 23.07.2024
(51) Int. Cl.: G06F 3/04883, G06F 3/14, G06F 9/451

(54) **SYSTEM FOR GESTURE RECOGNITION BY A REMOTE TOUCH-SENSITIVE DISPLAY**

(30) Priority: 25.07.2023 US 202318225936
(71) Applicant: Rockwell Collins, Inc., Cedar Rapids, IA 52498 (US)
(72) Inventor: ANDERSON, Eric N., Marion, 52302 (US); UTHE, Russ D., Ely, IA (US); FANNIN, Timothy R., Urbana, 52345 (US); CORBETT, Matthew P., Mount Vernon, 52314 (US)
(74) Representative: Dehns

(57) **Abstract**

A remote avionics display device (110) connected to a source graphics generator device (108) receives image data from the source device and presents an avionics display (100) via a touch-sensitive display surface (102). The avionics display includes a set of display windows (116), each display window having a size and function defined by window context data. Touch sensors (104) detect user contact points on the display surface. The remote ADD translates the sensed contact points into potential command/control gestures by correlating the contact points with window context data to determine which display window each contact is located and to which gesture each contact or set of contacts corresponds based on the window context data and current touch data structures for the appropriate display window. The remote ADD sends sensed contact points and the corresponding potential gesture data back to the source graphics generator.

## Description

### BACKGROUND

Remote display units (e.g., smartphones, tablets, electronic flight bags (EFB)) may be connected to a cockpit-based flight deck display system including, e.g., primary flight displays (PFD), multifunction flight displays (MFD), and/or other avionics displays. Newer generations of the flight deck display system, as well as the remote display units, may be touchscreen-based. For example, pilots, co-pilots, and other users interact directly with the display screen via their fingers, and points of contact are registered by capacitive touch controllers or other touch sensors. Software within the display system translates these points of contact into gestures, and determines the appropriate display system response for each interpreted gesture (based on, e.g., the nature of the contact, the particular window within the display system in which the contact was registered, and/or the relative location of the contact within the window). Display software knows, for example, into how many "windows" (e.g., logical partitions of the display surface which appear and function as discrete displays) a given flight deck display is currently divided, what a particular gesture (e.g., a contact or set of related contacts) at a particular location within a particular window is intended to mean (e.g., the user's intent), and how the display system should respond to the gesture.

Similarly, with respect to multitouch remote display systems, gesture recognition is performed within a software and/or application programming interface (API) framework within the operating system (OS). Hardware interfaces (e.g., touchscreen sensors) provide raw touch point data to the OS and its component layers. Even for remote display units connected to, and configured to mirror, flight deck display systems, the remote display hardware has no information about the window context of the mirrored flight deck display, e.g., into how many windows each physical display is divided, the size of each window, or the significance of each window (what is being displayed by that window). Accordingly, the remote display unit can register touch point/contact point data on a mirrored flight deck display but without window context cannot effectively interpret that contact point data nor provide the appropriate response. Instead, the remote display unit must rely on the flight deck display to provide gesture recognition, introducing latency and delaying reaction time.

### SUMMARY

In a first aspect, a remote avionics display device (ADD) is disclosed. In embodiments, the remote ADD includes a communications interface connecting the remote ADD to a source graphics generator device. The source graphics generator provides the remote ADD with pixel data via the communications interface, and the remote ADD presents an interactive avionics display via a touch-sensitive display surface based on the received pixel data. The remote ADD includes touch sensors for detecting user contact with the display surface (e.g., user interaction with, and/or control input for, the avionics display). A touch controller of the remote ADD receives the sensed contact points and identifies command or control gestures (e.g., the intended user control input) by correlating the sensed contact points with window context data defining each display window of the avionics display, e.g., the size, boundaries, and functions of each display window. The remote ADD sends the detected contact points and identified potential gesture data to the source device for processing.

In some embodiments, the source graphics generator device is a cockpit-based or aircraft-based device, and the window context data for each display window is based on a make and/or model of the aircraft and preloaded to the remote ADD.

In some embodiments, the remote ADD includes memory for storing the preloaded window context data.

In some embodiments, the preloaded window context data also includes touch data structures for each defined display window and defining gestures applicable within that display window.

In some embodiments, the touch controller receives window context data from the source device via the communications interface.

In some embodiments, the received window context data includes touch data structures (TDS) for each defined display window, each TDS defining gestures applicable within that display window.

In some embodiments, the remote ADD includes a memory for storing preloaded TDS for each display window (e.g., each defined display window, or every possible display window), and the touch controller determines potential gesture data based on the detected contact points, the window context data, and the preloaded TDS.

In some embodiments, the window context data includes a count of total display windows within the avionics display, and the size and boundaries of each display window.

In some embodiments, identified potential gestures are associated with two or more detected contact points (e.g., a two-finger tap, drag, press).

In some embodiments, an identified potential gesture indicates a redefinition or resizing or one or more display windows within the avionics display. The remote ADD provides updated window context data to the source device indicative of any changes in dimension or size to resized display windows.

In some embodiments, redefinition of a display window includes an expansion and/or contraction of one or more display windows within the avionics display.

In some embodiments, the remote ADD includes a tablet, smartphone, or electronic flight bag (EFB) device.

In some embodiments, the source device is a cockpit-based flight display, and the avionics display presented by the remote ADD mirrors the flight display.

In some embodiments, the communications interface is a physical/wired connection or a wireless connection via WiFi, Bluetooth, and/or other like wireless protocols.

In a further aspect, a method for potential gesture recognition by a remote avionics display device (ADD) connected to a source graphics generator device is also disclosed. In embodiments, the method includes receiving at the remote ADD pixel data or image data sent by the source device. The method includes presenting an interactive avionics display via a touch-sensitive display surface of the remote ADD, the avionics display based on the received image data and including a set of display windows whose size, boundaries, and/or functions are defined by window context data. The method includes detecting, via touch sensors of the remote ADD, contact points on the display surface (e.g., user engagement with the avionics display). The method includes identifying, via a touch controller of the remote ADD, potential command/control gestures (e.g., control input submitted by a user) by correlating the sensed contact points with window context data for the display windows of the avionics display (e.g., in which display window is a particular contact or set of contacts located, and to what command/control gesture do the contact/s likely correspond to in the context of that display window). The method includes providing, via the remote ADD, the sensed contact points and the corresponding potential gestures to the source device (e.g., for further processing and/or execution of responses to the identified gestures).

In some embodiments, the window context data is preloaded to the remote ADD. For example, the source device may be a cockpit-based or aircraft-based device, the window context data including all possible window configurations for that make and/or model of aircraft.

In some embodiments, the preloaded window context data includes touch data structures (TDS) for each defined display window, each TDS defining gestures applicable to that display window.

In some embodiments, the method includes receiving, via the remote ADD, the window context data from the source device.

In some embodiments, the method includes receiving touch data structures (TDS) from the source device with the received window context data.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 is a block diagram illustrating a remote avionics display device connected to, and providing gesture recognition for, a source graphics generator according to example embodiments of this disclosure;
FIG. 2 is a diagrammatic illustration of gesture recognition operations of the remote avionics display device of FIG. 1;
FIG. 3 is a block diagram illustrating a remote avionics display device connected to, and providing gesture recognition for, a source graphics generator according to example embodiments of this disclosure;
FIGS. 4 and 5 are diagrammatic illustrations of gesture recognition operations of the remote avionics display device of FIG. 3;
and FIG. 6 is a flow diagram illustrating a method for gesture recognition by a remote avionics display device according to example embodiments of this disclosure.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

Embodiments of the inventive concepts herein are directed to systems and methods for providing window context information to a remote avionics display device (ADD) connected to a source graphics generator. For example, the source graphics generator may not include a display, but may instead provide image data (e.g., pixel data) to the remote ADD (e.g., via digital visual interface (DVI), high-definition multimedia interface (HDMI), or other like physical interface). In some embodiments, the remote ADD and source graphics generator may be wirelessly connected via WiFi, Bluetooth, or other like wireless protocols. In some embodiments, the source graphics generator may be embodied in a cockpit-based or aircraft-based avionics display device mirrored by the remote ADD. By providing window context to the remote ADD, the remote ADD can perform, even with limited or minimal remote processing logic, accurate gesture recognition based on contact with its touch-sensitive display surface without having to rely on the source graphics generator, enhancing the reaction time of both systems and reducing overall system latency.

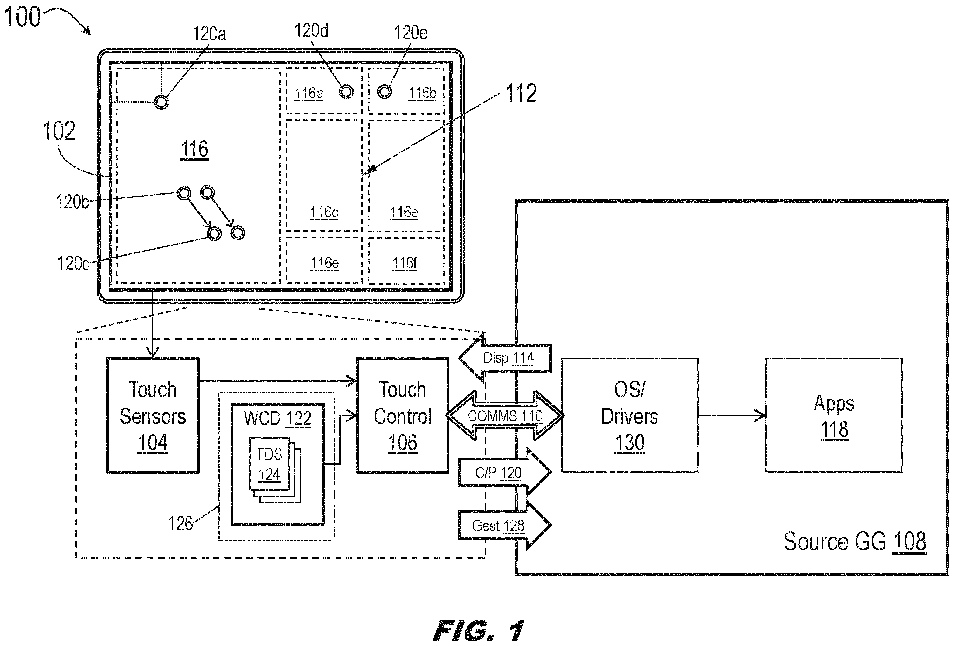

Referring to FIG. 1, a remote avionics display device (ADD) 100 is disclosed. The remote ADD 100 may include a touch-sensitive display surface 102, touch sensors 104, and a touch controller 106 including remote display logic.

In embodiments, the remote ADD 100 may be connected to a source graphics generator 108 via a communications interface 110 (e.g., ARINC 661, ARINC 818) via which the remote ADD may present an avionics display 112 based on display information 114 (which may include, e.g., pixel data, image data) provided by the source graphics generator 108. For example, the avionics display 112 may include a primary flight display (PFD), multifunctional display (MFD), and/or other navigational or operational flight deck displays.

In embodiments, the avionics display 112 may be divided (e.g., by the software/API application framework 118 running on the source graphics generator 108) into a set of display windows 116, 116a-116f. For example, the software/API application framework 118 running on the source graphics generator 108 may divide the avionics display 112 into a single half screen display window 116 (e.g., on a left-side portion of the avionics display) and a set of six display windows 116a-116f (e.g., on a right-side portion of the avionics display).

In embodiments, the touch sensors 104 may register contact point data 120 whenever a user of the remote ADD 100 engages with the display surface 102 (e.g., via contact using one or more fingers). For example, contact point data 120 may include, but is not limited to: a relative location 120a of the contact (e.g., relative to the display surface 102); a number of contacts (e.g., one, two, three fingers) and a location of each contact in a group relative to each other contact; a duration of each contact (e.g., in seconds or portions thereof; an instantaneous tap-and-release vs. a longer press); a start and end location (e.g., for drags, pinches, rotates, and/or any case where one or more contacting fingers contact the display surface at a first (start) relative location 120b and release from the display surface at a second (end) relative location 120c).

In embodiments, each display window 116, 116a-116f may also be associated with a particular set of window context data 122 (WCD). For example, each display window 116, 116a-116f may have a particular size (e.g., full screen, half screen) and a location relative to the avionics display 112 as a whole. If, for example, the display window 116 is half-screen, the size of that display window may be equivalent to half the size of the avionics display 112. Likewise, display windows 116a-116f may be defined, for example, in terms of their boundaries as defined by corner pixels relative to the avionics display 112 (e.g., top left + bottom right pixels defining a rectangular display window). In embodiments, window context data 122 for each display window 116, 116a-116f may further include a classification or purpose assigned to or associated with that display window (e.g., full-screen display, PDF, left-side MFD, right-side MFD).

In embodiments, WCD 122 may further include, for each display window 116, 116a-116f, a touch data structure 124 (TDS) defining a set of gestures applicable to that display window, each gesture corresponding to a particular interaction or set of interactions with the display window. For example, each TDS 124 may define, for a particular display window 116, 116a-116f, the type of contact/s with the display window (and, e.g., one or more locations and/or duration/s associated with said contact/s, relative to the display window) required to detect a particular gesture. In embodiments, based on a detection of a particular defined gesture, the application framework 118 of the source graphics generator 108 may execute one or more responses, e.g., commands or changes in displayed content when that gesture is detected.

In embodiments, the formatting of the avionics display 112 presented by the source graphics generator 108 may be predefined, e.g., according to an aircraft embodying the source graphics generator (e.g., specific to a particular make and/or model of aircraft), and preloaded to the remote ADD 100. For example, in the interest of meeting regulatory requirements and minimizing training costs, many commercial avionics displays operate according to a fixed set of applications 118 and a finite, limited number of fixed windowing formats and/or windowing contexts defining the layout of the avionics display 112 and its component display windows 116, 116a-116f, e.g., the placement, dimensions, and/or purposes of each display window. Accordingly, the preloaded WCD 122 corresponding to a particular aircraft incorporating the source graphics generator 108 to which the remote ADD 100 is connected (and with which the remote ADD will interact) may be stored to memory 126 or otherwise hard-coded into the remote display logic of the touch controller 106 (or elsewhere within the remote ADD 100) and accessible to the remote display logic.

In embodiments, when contact point data 120 is detected by the touch sensors 104 and passed to the touch controller 106, the touch controller may correlate the contact point data with the available preloaded window context data 122 (e.g., including the size, type, and/or boundaries of each display window 116, 116a-116f). For example, given each contact point 120a, 120d, 120e and/or set thereof 120b-120c as detected by the touch sensors 104 (e.g., each contact point corresponding to one or more locations relative to the display surface 102), the touch controller 106 may interpret the detected contact points based on the preloaded WCD 122 for the display window 116, 116a-116f corresponding to the relative location of the contact point/s. For example, the single-point contact 120a and the extended two-finger contact set 120b-120c may be interpreted according to the WCD 122 corresponding to the half-screen display window 116 (which may interpret the single-point contact as, e.g., a tap, a press, a long-press and the two-finger contact set as, e.g., a drag, a pan, a swipe). In some embodiments, preloaded WCD 122 stored by the remote ADD 100 may include one or more TDS 124 for each display window 116, 116a-116fdefining any gestures applicable to each display window. In other embodiments, the touch controller 106 may assign a TDS 124 to each display window 116, 116a-116f based on any available information about that display window as provided by the preloaded WCD 122.

In embodiments, although the two-finger contact 120b-120c and the contact points 120d, 120e may both represent simultaneous contact with the display surface 102 by two adjacent fingers, preloaded WCD 122 accessed by the touch controller 106 may indicate that the locations of the contact points 120d, 120e correspond to two different display windows 116a, 116b. Accordingly, the touch controller 106 may interpret each contact point 120d, 120e in the context of its associated display window 116a, 116b (in particular, the WCD 122 and/or TDS 124 for each display window), ignoring the contact point 120e when interpreting the contact point 120d and vice versa.

In embodiments, the touch controller 106 may send each set of detected contact point data 120, along with gesture data 128 determined by correlating the contact point data 120 with the preloaded WCD 122, to the source graphics generator 108 via the communications interface 110. For example, as the touch controller 106 already has remote-side access to the preloaded WCD 122, the touch controller (e.g., rather than the OS and/or drivers (130) of the source graphics generator 108) may perform gesture recognition, i.e., determining whether each detected contact point 120a-120e or set thereof meets the required criteria for a gesture defined in the context of its corresponding display window 116, 116a-116f. In some embodiments,

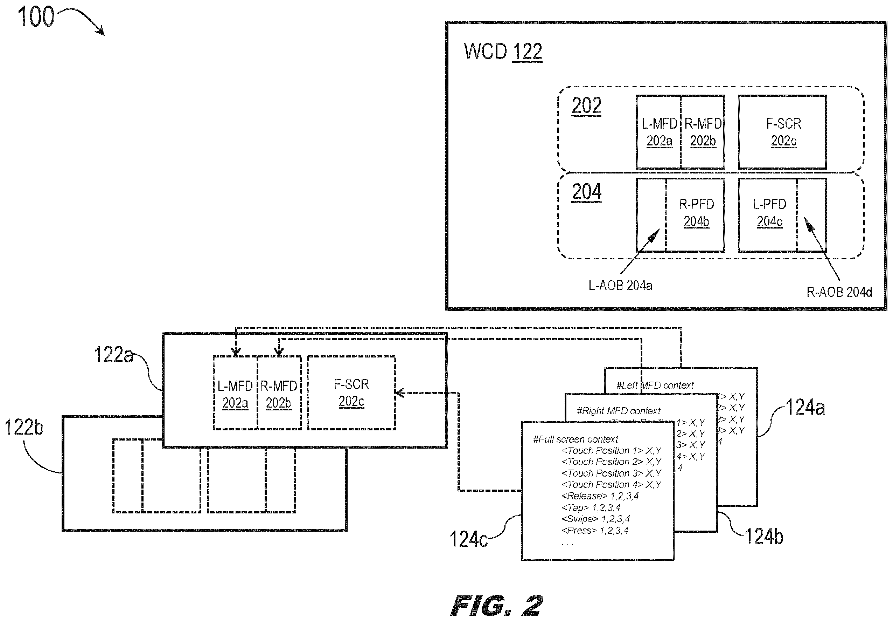

Referring also to FIG. 2, in embodiments preloaded sets of WCD 122 may be hard-coded or stored to memory (126, FIG. 1) within the remote ADD 100. For example, as noted above, due to regulatory considerations, cost considerations, and other factors associated with the embodying aircraft, the source graphics generator (108, FIG. 1) may be associated with a limited and finite number of possible display configurations and/or windowing formats. By way of a non-limiting example, a source graphics generator 108 incorporating two physical display units 108a, 108b(e.g., a pilot/left-side display unit and a co-pilot/right-side display unit) may be associated with two possible windowing formats. A first display format 202 may configure the left-side physical display unit for a left-side multifunction display 202a (MFD) in the left half of its display surface and a right-side MFD 202b in the right half of its display surface. Further, the first display format 202 may configure the right-side physical display unit as a full-screen display 202c.

Similarly, a second display format 204 may configure the left-side physical display unit 108a for a left-side auxiliary outboard (AOB) display 204a in a left-side portion (e.g., the left third) of its display surface and a right-side primary flight display 204b (PFD) in the remaining right-side portion (e.g., the right two-thirds). Further, the second display format 204 may configure the right-side physical display unit for a left-side PFD 204c and a right-side AOB 204d, e.g., respectively encompassing the left two-thirds and the right third of the display surface.

Accordingly, in embodiments the remote ADD 100 may be hard-coded or preloaded with two sets of WCD 122, a first WCD set 122a corresponding to the first display format 202 and a second WCD set 122b corresponding to the second display format 204. For example, preloaded WCD sets 122, 122a, 122b may be loaded to memory (126, FIG. 1) as noted above, loaded as configuration files, and/or fixed within a specific part number of the remote ADD 100.

In embodiments, the first and second preloaded WCD sets 122a, 122b may provide window sizes, window boundaries, window definitions, and defined/supported gestures supported for each component display window (e.g., left MFD 202a, right MFD 202b, full screen 202c; left AOB 204a, right PFD 204b, left PFD 204c, right AOB 204d). With respect to the first display format 202, the associated first WCD set 122a may provide, for each display window corresponding to the left MFD 202a, right MFD 202b, and full screen 202c, a respective touch data structure 124a, 124b, 124c (TDS) defining any available gesture inputs for that display window (including, but not limited to: touches, taps, releases, swipes, presses, long presses, pans, drags, rotates, pinches, and/or any applicable multi-finger gestures).

In embodiments, the remote display logic of the touch controller (106, FIG. 1) may correlate sensed contact point data (120, 120a-120e, FIG. 1) with each window configuration 202a-202c, 204a-204d potentially matching the avionics display (112, FIG. 1) in order to determine the most likely interpretations for the sensed contact point data, e.g., to which window configuration/s the avionics display 112 most likely corresponds and, based on the boundaries and definitions of the most likely display windows (and the relative locations of each contact point or set thereof), to which specific potential gestures the sensed contact point data correspond.

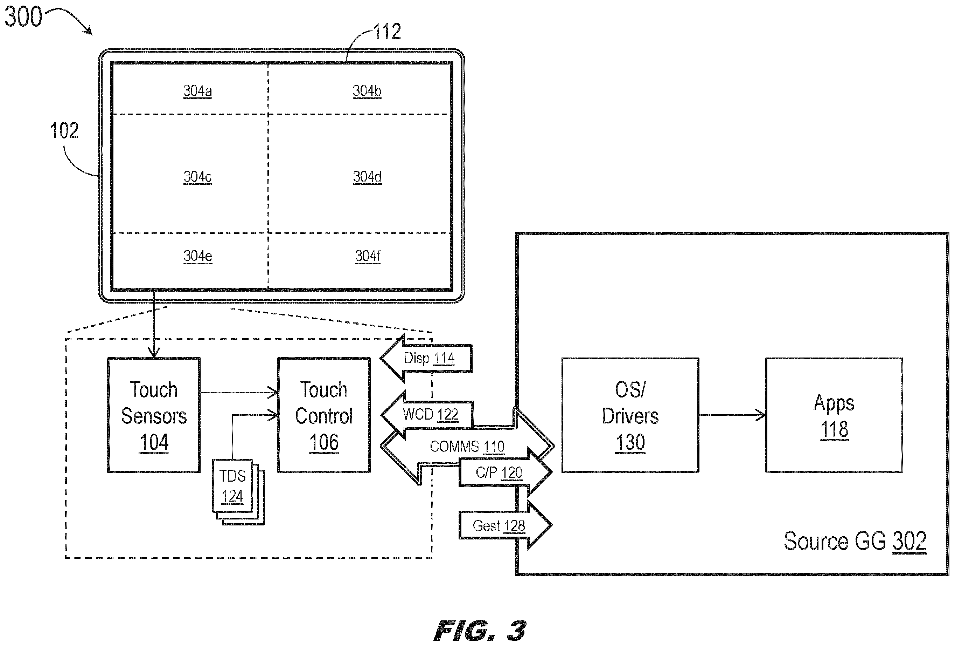

Referring now to FIG. 3, the remote ADD 300 and source graphics generator 302 may be implemented and may function similarly to the remote ADD 100 and source graphics generator 108 of FIG. 1, except that the remote ADD 300 and source graphics generator 302 may avoid the need to preload and/or hard-code specific window context data (WCD; 122, FIGS. 1-2) within the remote ADD by providing the remote ADD with current window context data (e.g., along with image data).

In embodiments, rather than pre-loading all possible windowing formats and/or window context configurations (202, 204; FIG. 2) for the avionics display 112, the source graphics generator 302 may provide current WCD 122 to the remote ADD 300 (e.g., via the communications interface 110). For example, the source graphics generator 302 may define a number of display windows 304a-304f (e.g., which may otherwise be implemented similarly to the display windows 116, 116a-116f, FIG. 1) and provide within the WCD 122 the number of display windows and the boundaries defining each display window within the avionics display 112. In some embodiments, the WCD 122 may be provided as ARINC 818 ancillary data.

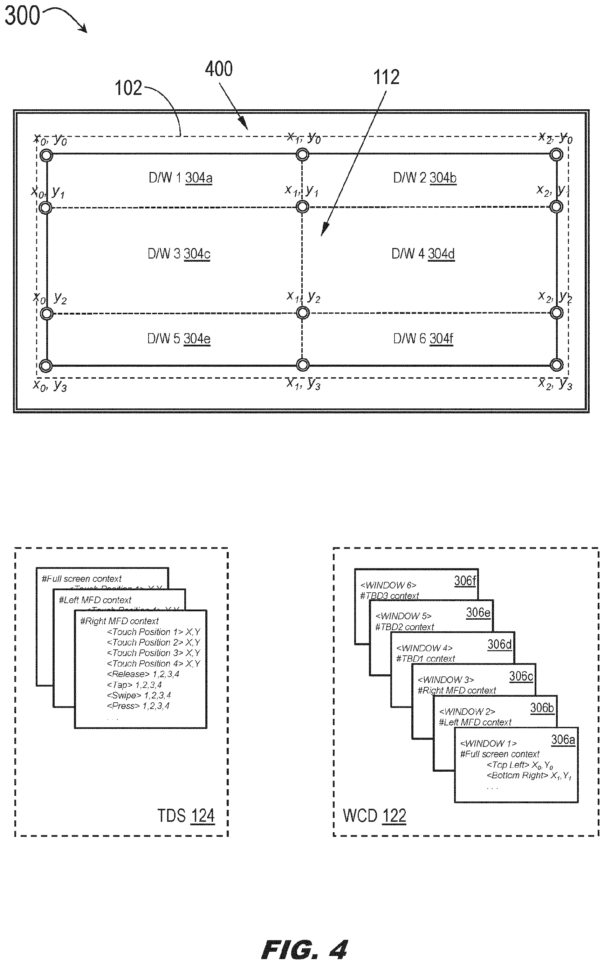

In embodiments, referring also to FIG. 4, wherein the avionics display 112 presented on the display surface 102 of the remote ADD 300 is configured for 6 display windows 304a-304f (by way of a non-limiting example), the WCD 122 may include a window data structure 306a-306f (WDS) for each defined display window 304a-304f. For example, the WDS 306a-306f for each display window 304a-304f may list any associated context for that display window (e.g., full screen, left/right PFD, left/right MFD) and the window size, e.g., as defined by its top left and bottom right bounding pixels with respect to the avionics display 112 (the display window 304c, for example, being bounded by the top left pixel ***x₀, y₁*** and the bottom right pixel ***x₁, y₂.*** In some embodiments, the WCD 122 provided by the source graphics generator 302 may identify areas (400) of the avionics display 112 outside the boundaries of, and/or not associated with, any defined display window 304a-304f (e.g., and therefore not associated with any detectable gestures).

In embodiments, referring in particular to FIG. 3, based on the WCD 122 (e.g., WDS 306a-306f) received from the source graphics generator 302 and the TDS 124 (124a-124c, FIG. 4) for each defined display window 304a-304f, the touch controller 106 may correlate contact point data 120 received from the touch sensors 104 to identify potential gesture data 128. For example, contact point data 120 sensed at specific relative locations on the display surface 102 of the remote ADD 300 may be correlated with current active WCD 122 defining each of the display windows 304a-304f of the avionics display 112. In embodiments, when the touch controller 106 has associated each contact point 120 with a display window 304a-304f, the touch controller may then interpret the contact point data according to the specific TDS 124, 124a-124c for each associated display window to identify potential gesture data 128 (e.g., the specific gestures corresponding to each contact point 120 in the context of the corresponding display window). In some embodiments, the TDS 124, 124a-124c may be stored by, hard-coded to, or otherwise known by the remote display logic of the touch controller 106. In other embodiments, the source graphics generator 302 may send complete TDS 124, 124a-124c (or, e.g., revisions to existing TDS) to the remote ADD along with the current WCD 122. For example, the current WCD 122 provided by the source graphics generator 302 may include revisions to the TDS 124, 124a-124c, e.g., directing the remote ADD 302 to enable or disable specific gestures associated with a particular display window 304a-304f.

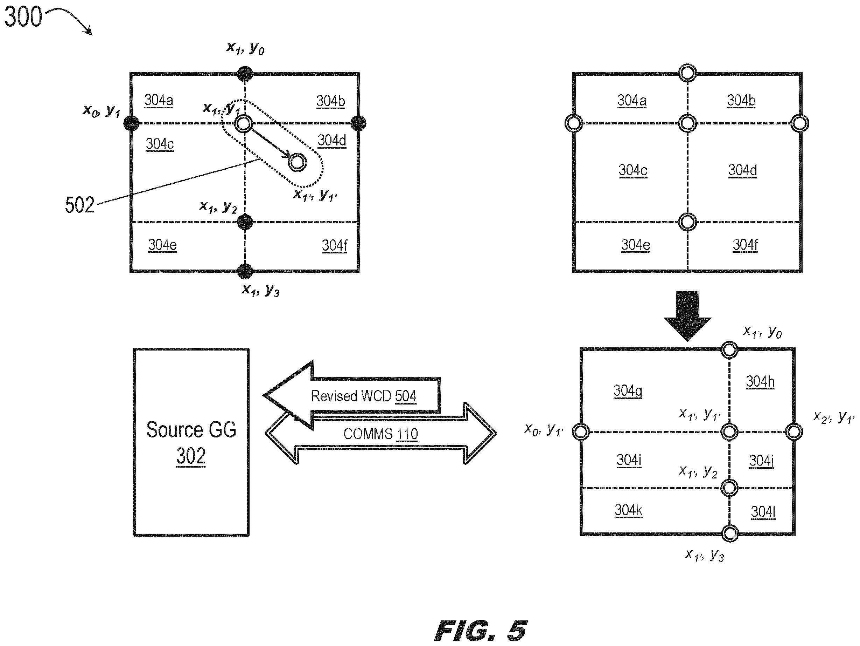

Referring now to FIG. 5, the remote ADD 300 and source graphics generator 302 are shown.

In embodiments, as noted above, the remote ADD 300 may identify gestures specific to a particular display window 304a-304f of the avionics display. For example, if contact points (120d-120e, FIG. 1) are detected in adjacent display windows (116a, 116b), the two contact points may be treated by the touch controller (106, FIG. 3) as two discrete contact points, each specific to the display window within which it was detected. However, in some embodiments the remote ADD 300 may detect and identify gestures corresponding to a resizing (304g-304l) of one or more display windows 304a-304f of the avionics display 112. For example, the touch sensors (104, FIG. 3) of the remote ADD 300 may detect a dragging gesture 502 originating at or near an intersection point ***x₁, y₁*** (and ending at a point ***x_{1'}, y_{1'}***) defining a boundary of one or more display windows 304a-304d. Based, on the current active WCD (122, 306a-306f, FIG. 4) and the current TDS (124, 124a-124c, FIG. 4), the dragging gesture 502 may be interpreted by the touch controller as an expansion (304g) of the display window 304a (e.g., whose new bottom right pixel may be ***x_{1'}, y_{1'}***) and a corresponding resizing (304h-304l) of the remaining display windows 304b-304f (e.g., some of which may also expand (e.g., display window 304e expanding to display window 304k) and some of which may contract (e.g., display windows 304d, 304f contracting to display windows 304j, 304l).

In embodiments, the expansion 304g of the display window 304a also resizes (304h-304l) the remaining display windows 304b-304f and thus may redefine several other intersection points that bound the display windows according to the current WCD 122. For example, as shown by FIG. 5, the following intersection points may be redefined: ***x₀, y₁*** to ***x₀, Y1'; x₁, y₀*** to ***x_{1'}, Yo; x₁, y₁*** to ***x_{1'}, y_{1'}*; *x₂, y₁*** to ***x₂, _{y1'}*; *x₁, y₂*** to ***x_{1'}, y₂*;** and ***x₁, y₃*** to ***x_{1'}, y₃.*** In embodiments, when identified gestures input by the user via the remote ADD 300 revise the WCD 122, 306a-306f provided by the remote ADD by the source graphics generator 302, the touch controller 106 may provide (e.g., via the communications interface 110) the source graphics generator with (in addition to detected contact points 120 and corresponding gesture data (128, FIG. 4)) revised window context data 504, including any redefinitions (304g-304l) of the boundaries and/or sizes of display windows 304a-304f due to the accompanying gesture data.

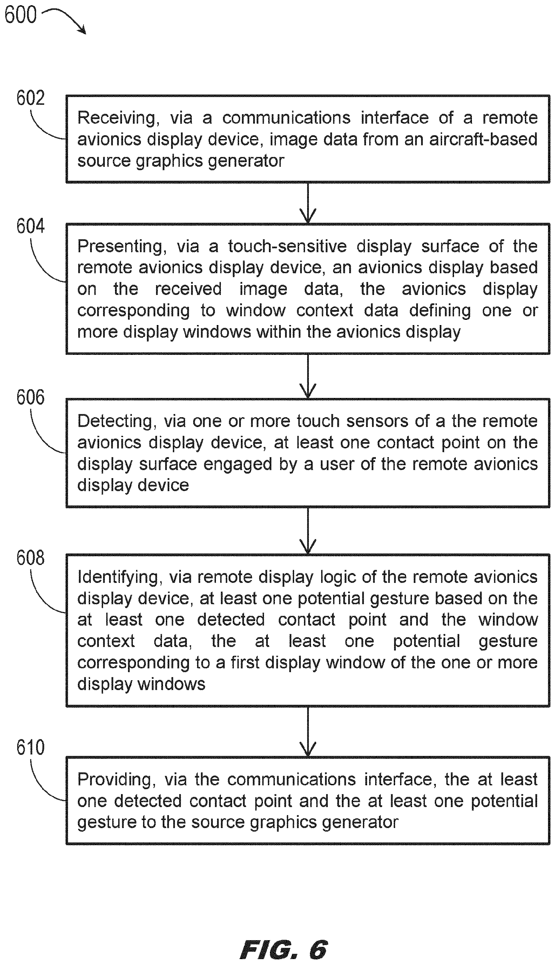

Referring now to FIG. 6, the method 600 may be implemented by the remote avionics display device (ADD) 100, 300 and may include the following steps.

At a step 602, the remote ADD receives image data from a source graphics generator device via a communications interface. For example, the image data may include pixel data corresponding to an interactive avionics display.

At a step 602, the remote ADD presents the avionics display based on the received image data via a touch-sensitive display surface. For example, the avionics display may include multiple interactive display windows, the boundaries and purpose of each display window defined by window context data (WCD) and each display window having a touch data structure (TDS) defining gestures (e.g., tactile interactions or contacts by a user) applicable within that display window (e.g., and associated with commands or applications executable by the source graphic generator).

At a step 606, touch sensors of the remote ADD detect contact with the touch-sensitive display surface of the remote ADD at specific points on the display surface.

At a step 608, remote display logic of the remote ADD identifies potential gesture data by correlating the contact points sensed by the touch sensors with current active window context data and/or touch data structure to determine to which specific gestures in which specific display windows the sensed contact points correspond. For example, applicable window context data (e.g., window sizes, boundaries, and/or functions) may be fixed and preloaded to the remote ADD. The preloaded window context data may include touch data structures for each defined display window, or the remote display logic may infer or assign touch data structures based on available information provided by the window context data. In some embodiments, the source graphics generator provides the remote ADD with window context data (e.g., with the transmitted image or pixel data). For example, window context data received by the remote ADD from the source graphic generator may include touch data structures for display windows defined by the window context data, or the remote ADD may determine touch data structures (e.g., from a set of possible touch data configurations) based on the received window context data.

At a step 608, the remote ADD provides the source graphics generator with detected contact point data in addition to potential gesture data based on the contact point data. For example, based on a contact or set of contacts detected by the touch sensors, gesture data will associate the contact/s with a particular display window or windows, and define one or more gestures to which the detected contact/s correspond based on the context applicable to the display window in which the contacts were detected. In some embodiments, e.g., if a contact or set of contacts resizes one or more display windows, the remote ADD provides the source graphic generator with revised window context data.

### CONCLUSION

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

Although inventive concepts have been described with reference to the embodiments illustrated in the attached drawing figures, variations are possible without departing from the scope of the invention as defined by the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

## Claims

1. A remote avionics display device, comprising:
a communications interface (110) couplable to a source graphics generator (108), the source graphics generator configured to provide image data to the remote avionics display device (100), the image data corresponding to an avionics display presented by the remote avionics display device, the avionics display comprising one or more display windows (116) associated with window context data;
a touch-sensitive display surface (102) configured for presentation of the avionics display based on the image data, the touch-sensitive display surface including one or more touch sensors (104) configured to detect one or more contact points of the display surface when engaged by a user;
and
a touch controller (106) including remote display logic operatively coupled to the touch sensors and to the communications interface, the touch controller configured to:
receive the one or more detected contact points from the touch sensors;
identify at least one potential gesture based on the detected contact points and the window context data, the at least one potential gesture corresponding to a first display window of the one or more display windows;
and
provide the one or more detected contact points and the at least one potential gesture to the source graphics generator via the communications interface.

2. The remote avionics display device of Claim 1, wherein:
the source graphics generator is embodied in an aircraft;
the window context data corresponds to at least one of a make or a model of the aircraft;
and
the window context data is preloaded to the remote avionics display device.

3. The remote avionics display device of Claim 2, further comprising:
a memory (126) coupled to the touch controller, the memory configured for storage of the preloaded window context data.

4. The remote avionics display device of Claim 2, wherein the preloaded window context data includes at least one touch data structure, TDS, (124) corresponding to each display window, each TDS comprising one or more gestures associated with the corresponding display window.

5. The remote avionics display device of any preceding Claim, wherein:
the touch controller is configured to receive the window context data from the source graphics generator via the communications interface, and optionally wherein the received window context data includes at least one TDS corresponding to each display window, each TDS comprising one or more potential gestures associated with the corresponding display window.

6. The remote avionics display device of Claim 5, further comprising:
a memory (126) coupled to the touch controller, the memory configured for storage of one or more preloaded touch data structures, TDS, associated with the one or more display windows;
wherein the touch controller is configured to identify at least one potential gesture based on the detected contact points, the window context data, and the one or more TDS.

7. The remote avionics display device of any preceding Claim, wherein the window context data comprises:
a count of the one or more display windows;
and
one or more bounds corresponding to each display window.

8. The remote avionics display device of any preceding Claim, wherein the at least one potential gesture is associated with two or more detected contact points and/or wherein:
the at least one potential gesture is associated with at least one redefinition of the first display window;
and
the touch controller is configured to provide to the source graphics generator revised window context data corresponding to the at least one redefinition, and optionally wherein the at least one redefinition is associated with one or more of:
an expansion of the at least one redefined first display window;
or
a contraction of the at least one redefined first display window.

9. The remote avionics display device of any preceding Claim, wherein the remote display device includes at least one of a tablet, a smartphone, or an electronic flight bag, EFB.

10. The remote avionics display device of any preceding Claim, wherein:
the source graphics generator includes at least one cockpit-based flight display embodied in an aircraft;
and
the avionics display is configured for mirroring the flight display.

11. The remote avionics display device of any preceding Claim, wherein the communications interface is a wireless interface associated with at least one wireless protocol.

12. A method for gesture recognition by a remote display device, the method comprising:
receiving, via a communications interface (110) of a remote avionics display device (100), image data from an aircraft-based source graphics generator (108);
presenting, via a touch-sensitive display surface (102) of the remote avionics display device, an avionics display based on the received image data, the avionics display corresponding to window context data defining one or more display windows (116) within the avionics display;
detecting, via one or more touch sensors (104) of the remote avionics display device, at least one contact point on the display surface engaged by a user of the remote avionics display device;
identifying, via a touch controller (106) of the remote avionics display device, at least one potential gesture based on the at least one detected contact point and the window context data, the at least one potential gesture corresponding to a first display window of the one or more display windows;
and
providing, via the communications interface, the at least one detected contact point and the at least one potential gesture to the source graphics generator.

13. The method of Claim 12, wherein the source graphics generator is embodied aboard an aircraft and identifying, via a touch controller of the remote avionics display device, at least one potential gesture based on the at least one detected contact point and the window context data includes:
identifying, via a touch controller of the remote avionics display device, at least one potential gesture based on the at least one detected contact point and window context data preloaded to the remote avionics display device, the preloaded window context data corresponding to at least one of a make or a model of the aircraft, and optionally wherein the preloaded window context data includes at least one touch data structure, TDS, corresponding to each display window, each TDS comprising one or more potential gestures associated with the corresponding display window.

14. The method of Claim 12 or 13, wherein identifying, via a touch controller of the remote avionics display device, at least one potential gesture based on the at least one detected contact point and the window context data includes:
receiving the window context data from the source graphics generator via the communications interface.

15. The method of Claim 14, wherein receiving the window context data from the source graphics generator via the communications interface includes:
receiving one or more touch data structure, TDS, corresponding to the one or more display windows, each TDS comprising one or more gestures associated with the corresponding display window.
